(19) Europäisches Patentamt
European Patent Office
Office européen des brevets

(11) **EP 2 099 124 A2**

(12) **EUROPÄISCHE PATENTANMELDUNG**

(43) Veröffentlichungstag:
**09.09.2009 Patentblatt 2009/37**

(51) Int Cl.:
*H02P 9/00* (2006.01)　　　*H02P 5/747* (2006.01)

(21) Anmeldenummer: **09153559.1**

(22) Anmeldetag: **25.02.2009**

(84) Benannte Vertragsstaaten:
**AT BE BG CH CY CZ DE DK EE ES FI FR GB GR
HR HU IE IS IT LI LT LU LV MC MK MT NL NO PL
PT RO SE SI SK TR**
Benannte Erstreckungsstaaten:
**AL BA RS**

(30) Priorität: **04.03.2008　DE 102008012471**

(71) Anmelder: **Siemens Aktiengesellschaft
80333 München (DE)**

(72) Erfinder:
- **Geil, Günter
  28277, Bremen (DE)**
- **Wietoska, Jens
  28201, Bremen (DE)**
- **de Ruiter, Robin
  20251, Hamburg (DE)**

(54) **Antrieb mit durch Stromzwischenkreisumrichter gespeisten Drehstromsynchronmaschinen**

(57)　Die Erfindung richtet sich auf einen Antrieb mit durch Stromzwischenkreisumrichter gespeisten Drehstromsynchronmaschinen, für eine Nennleistung von 10 MW oder darüber, wobei die Rotoren wenigstens zweier Drehstromsynchronmaschinen mechanisch miteinander gekoppelt sind.

FIG 1

**Beschreibung**

Die Erfindung richtet sich auf einen Antrieb mit durch Stromzwischenkreisumrichter gespeisten Drehstromsynchronmaschinen in Tandemanordnung, für eine Nennleistung von 10 MW oder darüber.

Solche Antriebe kommen vorzugsweise dort zum Einsatz, wo bei niedrigen Drehzahlen große Leistungen im Megawattbereich erforderlich sind, also bspw. bei dieselelektrischen Schiffsantrieben.

Vorzugsweise umfasst der Leistungteil für die Statorwicklungen eines solchen Antriebs einen netzgeführten Thyristorstromrichter, einen maschinengeführten Thyristorstromrichter und wenigstens eine Glättungsdrossel im Zwischenkreis. Mit einem solchen Umrichter für den Ankerstrom kann eine Synchronmaschine in einem weiten Drehzahlbereich stufenlos drehzahlveränderbar betrieben werden. Dabei wird außerdem der Erregerwicklung im Rotor ein Erregerstrom zugeführt. Es handelt sich hierbei um einen Gleichstrom, der meistens von einem mitrotierenden Gleichrichter aus einer induktiv übertragenen zwei- oder dreiphasigen Wechselspannung erzeugt wird.

Während der Erregerstrom in der rotierenden Erregerwicklung üblicherweise nur etwa konstant zu halten ist, ergibt sich für die Erzeugung des Ankerstroms in den Statorspulen folgende Betriebsweise:

Einerseits wird der netzseitige Stromrichter vom Drehstromnetz geführt und entsprechend getaktet; der maschinenseitige Stromrichter wird dagegen von der Synchronmaschine geführt und entsprechend der Läuferstellung getaktet. Dabei wird in Abhängigkeit von der im Anker der Maschine induzierten Spannung der Ständerstrom der Synchronmaschine, welcher die Ständerdurchflutung hervorruft, weitergeschaltet, und zwar nur dann, wenn sich auch das Polrad tatsächlich weitergedreht hat. Der maschinenseitige Stromrichter schaltet über Thyristoren einen Gleichstrom, nämlich den Zwischenkreisstrom des Umrichters, so von einer Anker- bzw. Statorspule auf die nächstfolgende weiter, dass im Motorständer ein Drehfeld entsteht, das den Motorläufer drehfeldsynchron mitnimmt. Dabei ist es die Aufgabe des maschinenseitigen Stromrichters, die räumliche Zuordnung von Ständerdurchflutung und Erregerfluss im Mittel konstant zu halten. Zu diesem Zweck werden in der Steuereinrichtung für den maschinenseitigen Stromrichter, vorzugsweise in Abhängigkeit von der induzierten Maschinenspannung im Anker, ggf. auch in Abhängigkeit von Lagesensoren, Impulse erzeugt, welche die Thyristoren des maschinenseitigen Umrichters in der richtigen Reihenfolge und entsprechend der gewünschten Aussteuerung zünden. Dadurch wird der Strom im Zwischenkreis, dessen Höhe durch geeignete Ansteuerung des netzgeführten Stromrichters entsprechend eines von einem Drehzahlregler ausgegebenen Drehmomentsollwertes geregelt wird, bei bestimmten Läuferstellungen von einer Spule auf die nächste weitergeschaltet bzw. kommutiert. Für eine im Stern geschaltete, dreiphasige Ankerwicklung S1, S2, S3 gibt es dabei insgesamt nur sechs verschiedene Zustände: Entweder fließt der Strom durch S1 nach S2 oder nach S3, oder von S2 nach S1 oder S3, oder von S3 nach S1 oder S2. Daher sind bei einer solchen Synchronmaschine nur sechs diskrete Lagen der Ankerdurchflutung innerhalb einer Polpaarteilung möglich, und es entsteht in der Maschine keine kontinuierlich umlaufende, sondern eine springende Drehdurchflutung, bei einer Polpaarzahl von 1 bspw. jeweils um 60° mechanisch, bei einer sechspoligen Maschine dagegen jeweils um 20° mechanisch, etc. Die Ankerdurchflutung steht zwischen zwei Kommutierungen im Raume still. Das Polrad und damit die Achse des Erregerflusses bewegen sich jedoch unter dem Einfluss des Drehmomentes etwa kontinuierlich weiter, so dass sich der Winkel zwischen Ankerdurchflutung und Erregerfluss und damit insbesondere auch die zum Erregerfluss senkrechte Komponente der Ankerdurchflutung ändern. Damit ändert sich auch bei gleichbleibendem Strom der Augenblickswert des Drehmomentes. Bei jeder Kommutierung springt der Winkel zwischen Ankerdurchflutung und Erregerfluss auf den Ausgangswert zurück. Es gibt demnach periodische Schwankungen des Drehmomentes im Luftspalt der Maschine, deren Periode insbesondere von der Polpaarzahl und der Drehzahl der Synchronmaschine abhängen. Dieser Periode entspricht eine Frequenz, die bei langsam laufenden Maschinen im hörbaren Bereich liegt. Die Höhe der periodischen Schwankung des Drehmomentes im Luftspalt der Maschine fällt mit steigender Polpaarzahl.

Hinzu kommt ein weiterer, nachteiliger Effekt: Während bei Drehzahlen oberhalb von 10 % der Nenndrehzahl eine Kommutierung von einer Ankerspule zu einer anderen nach Zünden eines entsprechenden Ventils selbsttätig erfolgen kann, reicht die Spannung an den Klemmen der Statorwicklungen der Synchronmaschine unterhalb dieser Drehzahl für eine selbsttätige Kommutierung nicht aus. Da die üblicherweise verwendeten Thyristoren nicht einfach abgeschalten werden können, muss in diesem Fall die Löschung des maschinenseitigen Stromrichters auf eine andere Art bewirkt werden. Dies wird üblicherweise dadurch bewirkt, dass durch eine geeignete Ansteuerung des netzgeführten Stromrichters die Polarität der von dieser vorgegebenen Spannung in dem Zwischenkreis umgekehrt wird, so dass infolgedessen der Strom in dem Zwischenkreis abgebaut wird. Nach Abbau des Zwischenkreisstroms und Ablauf der für die Thyristoren erforderlichen Schonzeit sind diese gelöscht und können zuverlässig sperren. Erst dann wird im maschinenseitigen Stromrichter der nächste Thyristor gezündet und durch Rückkehr zur ursprünglichen Polarität der Spannung am netzseitigen Stromrichter der Zwischenkreisstrom wieder aufgebaut. Somit wird der Strom für beide Stromrichter periodisch zum Lücken gebracht, wobei alle vorher stromführenden Ventile des maschinenseitigen Stromrichters während der Stromlücke ihre Sperrfähigkeit wiedergewinnen und anschließend zwei Ventile neu gezündet werden. Infolge dieses lückenden Stroms erfährt auch der Ankerstrom eine erhebliche periodische Pulsation, welche zu einer entsprechend starken periodischen Schwankung des Drehmomentes führt.

Diese Drehmomentschwankungen - unabhängig davon, ob sie von der sprunghaften Weiterschaltung der Ankerdurchflutung herrühren oder von dem lückenden Strom im Zwischenkreis - werden über den Luftspalt auf den Rotor weitergegeben, der mit seiner Massenträgheit sehr stark glättend wirkt. Der Rotor gibt die geglätteten Drehmomentschwankungen an die Abtriebswelle weiter. Dort können sie bei sensiblen Maschinen bzw. Lasten zu Schwingungsproblemen führen.

Dies gilt ganz besonders bei diesel-elektrischen Antrieben von seegehenden Schiffen, weil sich dort die Schwingungen im Drehmoment als Körperschall durch den gesamten Schiffsrumpf hinweg ausbreiten und überall wahrnehmbar sind. Bei Passagierschiffen mindert dies das Wohlbefinden der Passagiere.

Darüber hinaus wird der Körperschall von dem Propeller als niederfrequente Druckschwankung auf das Wasser übertragen, wo sie sich sehr weit als Schallwellen ausbreiten können. Dies beeinträchtigt einerseits die Einsatzmöglichkeiten eines Schiffes in Seegebieten, die einen besonderen Schutz vor den von Seeschiffen ausgehenden Schallwellen haben; andererseits können Marineschiffe dadurch über sehr große Entfernungen hinweg relativ leicht geortet werden, was ebenfalls nicht wünschenswert ist. Vergleichbare Einschränkungen gibt es auch bei Schiffen für den hydrographischen Einsatz auf See.

Daraus resultiert das die Erfindung initiierende Problem, wie bei gattungsgemäßen Antrieben der von systembedingten Drehmomentschwankungen herrührende Körperschall so weit als möglich reduziert werden kann.

Die Lösung dieses Problems gelingt dadurch, dass die Rotoren wenigstens zweier Drehstromsynchronmaschinen mechanisch miteinander gekoppelt sind.

Durch eine derartige, mechanische Kopplung zweier gattungsgemäßer Antriebe kann eine teilweise Kompensation bzw. Reduzierung der systembedingten Drehmomentschwankungen erzielt werden und infolgedessen auch eine Reduzierung des erzeugten Körperschalls.

Es hat sich als günstig erwiesen, dass der Antrieb für niedrige Drehzahlen ausgelegt ist, insbesondere zum Antrieb eines Schiffspropellers. Gerade in diesem Drehzahlbereich, wo die Nachteile konventioneller Antriebe mit Stromzwischenkreisumrichter und Drehstromsynchronmaschine besonders gravierend zutage treten, sind die Vorteile des erfindungsgemäßen Prinzips deutlich spürbar.

Es liegt im Rahmen der Erfindung, dass wenigstens zwei baugleiche Drehstromsynchronmaschinen miteinander gekoppelt sind. Baugleiche Maschinen haben sowohl in mechanischer als auch in elektrischer Hinsicht identisches Verhalten und sind daher in der Lage, ihre störenden Nebeneffekte gegenseitig in höchstem Maße zu kompensieren.

Die Erfindung lässt sich dahingehend weiterbilden, dass jede Drehstromsynchronmaschine wenigstens zwei Drehstromwicklungen aufweist, welche gegeneinander versetzt sind. Durch diesen Versatz kann erreicht werden, dass die Kommutierungen innerhalb der beiden Drehstromwicklungen ebenfalls versetzt stattfinden. Bspw. gibt es innerhalb einer Drehstromwicklung sechs Kommutierungen pro Umdrehung, also um jeweils 60° gegeneinander versetzt. Die davon ausgelösten Drehmomentschwankungen haben also - bei einer Polpaarzahl von 1 - eine Frequenz, welche sechsmal so groß ist wie die Drehzahl. Finden dazwischen weitere Kommutierungen statt, so verringert sich die Periode der Drehmomentschwankungen, und deren Frequenz erhöht sich. Je höher die Frequenz ist, umso geringer ist jedoch der Fortpflanzungseffekt innerhalb des metallischen Schiffsrumpfes, dessen Teile relativ niedrige Resonanzfrequenzen haben.

Die Erfindung bevorzugt, dass jede Drehstromsynchronmaschine zwei Drehstromwicklungen aufweist, welche um einen Winkel von 30° gegeneinander versetzt sind. Damit gibt es insgesamt zwölf Kommutierungen ($m = 12$) in jeweils gleichen Zeitabständen pro Polteilung, d.h. pro Polpaarzahl $p$, und daher gibt es pro einer Umdrehung des Polrades $m * p = 12 * p$ Kommutierungen, mithin hat die Grundwelle der Drehmomentschwankungen in diesem Fall eine Frequenz $f = m * p * n = 12 * p * n$ und ist damit gegenüber der sechspulsigen Ausführungsform ($m = 6$) verdoppelt. Die Grundwelle erzeugt den stärksten Körperschall, da sie der mechanischen Resonanzfrequenz technischer Anlagen, insbesondere einer Schiffskonstruktion, am nächsten liegt.

Für einen optimalen Effekt des erfindungsgemäßen Prinzips sieht die Erfindung weiter vor, dass die Rotoren wenigstens zweier Drehstromsynchronmaschinen derart miteinander gekoppelt sind, dass jeweils zwei Positionswinkel $a_1$, $a_2$, welche die beiden Rotoren mit jeder beliebigen, als Bezug dienenden Statorwicklung ihrer betreffenden Drehstromsynchronmaschine einschließen, stets ungleich sind:

$$a_1 - a_2 \; ⑤ \; 0.$$

Da eine Kommutierung in identisch aufgebauten und angesteuerten Drehstromsynchronmaschinen stets bei einem bestimmten Positionswinkel $a_1$, $a_2$ des Rotors bzw. Polrades gegenüber einer Statorwicklung erfolgt, sichert die obige Regel, dass die Kommutierungen der beiden Drehstromsynchronmaschinen niemals zur selben Zeit stattfinden. Da sich infolge der mechanischen Kopplung zwischen den Rotoren der beiden Drehstromsynchronmaschinen deren Drehmomente addieren, trifft dies auch für die Drehmomentschwankungen zu. Der zeitliche Versatz zwischen den Perioden der beiden Drehmomentschwankungen kann derart eingestellt werden, dass bei einem Drehmomentminimum einer Maschine die andere gerade ihr Drehmomentmaximum erreicht, so dass sich ein Minimum und ein Maximum zumindest teilweise kompensieren und damit weitgehend auslöschen.

Besonders effizient wird dieses Prinzip, wenn ein Drehmomentminimum einer Drehstromsynchronmaschine exakt mit einem Drehmomentmaximum der anderen Maschine zusammentrifft. Dies erreicht man dadurch, dass die Rotoren wenigstens zweier Drehstromsynchronmaschinen derart miteinander gekoppelt werden, dass jeweils zwei Positionswinkel $a_1$, $a_2$, welche die beiden Rotoren mit einer als Bezug dienenden Statorwicklung ihrer betreffenden Drehstromsynchronmaschine einschließen, sich etwa durch einen Zwischenwinkel (Versatzwinkel β) unterscheiden, welcher sich bestimmt aus dem Quotient, gebildet aus 180°, dividiert durch das Produkt aus Polpaarzahl mal Maschinenpulse, jeweils bezogen auf eine Drehstromsynchronmaschine:

$$ß = a_1 - a_2 = 180° / p * m,$$

wobei

p = Polpaarzahl pro Drehstromsynchronmaschine
m = Maschinenpulse pro Drehstromsynchronmaschine

Die Erfindung lässt sich auf besonders einfachem Wege dadurch realisieren, dass die Rotoren wenigstens zweier Drehstromsynchronmaschinen durch eine Zwischenwelle miteinander gekoppelt sind. Mit dieser Zwischenwelle kann einerseits ein gewisser Abstand zwischen den beiden, vorzugsweise baugleichen Drehstromsynchronmotoren erreicht werden, der bspw. für die Inspektion, Wartung und Instandhaltung vorteilhaft ist; außerdem lässt sich damit der obige Versatzwinkel äußerst präzise vorgeben.

Zur mechanischen Verbindung mit den Rotorwellen der beiden, im Tandem betriebenen Drehstromsynchronmotoren sollte die Zwischenwelle endseitige Anschlüsse, vorzugsweise Anschlussflansche, insbesondere mit einer ringförmigen Geometrie, aufweisen.

Sofern die endseitigen Anschlüsse, insbesondere Anschlussflansche, kranzförmig angeordnete Befestigungsbohrungen aufweisen, lässt sich eine Schraubverbindung mit einer angrenzenden Rotorwelle herstellen, indem durch die sodann miteinander fluchtenden Bohrungen in den plan aneinanderliegenden Anschlussflanschen je eine Maschinenschraube greift.

Gerade bei völlig baugleichen Drehstromsynchronmaschinen ist auch die Lage des Polrades, bspw. dessen d-Achse, relativ zu den Befestigungsbohrungen in den Anschlussflanschen völlig identisch. Die Maschinenwellen ließen sich demnach ohne jeglichen Versatz direkt zusammenschrauben. Die Erfindung sieht jedoch vor, dass die kranzförmig angeordneten Befestigungsbohrungen in den beiden Anschlussflanschen der Zwischenwelle derart angeordnet sind, dass sie bei einer Verdrehung um den Versatzwinkel β = $a_1$ - $a_2$ = 180° / p * m ineinander übergehen. Mit einer derartigen Zwischenwelle lassen sich die Rotorwellen beider Drehstromsynchronmaschinen derart miteinander verbinden, dass ihre Polräder genau um den berechneten Versatzwinkel β = $a_1$ - $a_2$ = 180° / p * m gegeneinander verdreht sind. Werden nun - wie die Erfindung weiter vorsieht - die Ständer der beiden Maschinen an einem gemeinsamen Fundament, insbesondere in einer gemeinsamen Ebene, verankert, so dass ihre Rotoren in einer gemeinsamen Flucht liegen, so überträgt sich der mittels der Zwischenwelle vorgegebene Versatzwinkel auf die jeweilige Relativlage zwischen Rotor und Stator und bewirkt damit ein zeitlich versetztes kommutieren, vorzugsweise um **?**/2, wobei **?** die Periode der Drehmomentschwankungen in einer Drehstromsynchronmaschine ist.

Die erfindungsgemäße Konstruktion erfährt eine weitere Optimierung dadurch, dass jede Drehstromwicklung einer, vorzugsweise beider, insbesondere aller Drehstromsynchronmaschinen durch einen eigenen Stromzwischenkreisumrichter gespeist wird. Damit können die Kommutierungen in den beiden drehstromsynchronmaschinen völlig unabhängig voneinander, also zu unterschiedlichen Zeitpunkten, erfolgen.

Die Stromzwischenkreisumrichter können einzeln ein- und abschaltbar ausgebildet sein, um bspw. bei Störungen in einem oder mehreren Stromzwischenkreisumrichtern den Weiterbetrieb der Drehstromsynchronmaschinen bei reduziertem Drehmoment zu ermöglichen.

Um den Strom im Zwischenkreis jedes Stromzwischenkreisumrichters unabhängig voneinander auf einen vorgegebenen Sollwert regeln zu können, ist der netzseitige Gleichrichter jedes Stromzwischenkreisumrichters mit einem eigenen Stromregler gekoppelt.

Andererseits kann der Sollwert für die Regelung des Stroms in dem Zwischenkreis jedes eingeschalteten Stromzwischenkreisumrichters von einem gemeinsamen Drehzahlregler abgeleitet werden. Im normalen Dauerbetrieb mehrerer eingeschalteter Stromzwischenkreisumrichter erhalten dieselben einfach denselben Drehmomentsollwert und werden daher versuchen, jeweils identische Drehmomente zu erzeugen, so dass alle Drehstromsynchronmaschinen die selbe Leistung erbringen, damit der selben Belastung ausgesetzt sind und sich demzufolge auch in idealer Weise kompensieren können.

Eine besondere Situation ist jedoch gegeben, wenn ein bisher abgeschalteter Stromzwischenkreisumrichter zu einem oder mehreren, bereits aktiven Umrichtern zugeschalten werden soll. Bei einem harten Einschalten müsste der zugeschaltete Umrichter schlagartig das von dem Drehzahlregler in diesem Zeitpunkt gerade vorgegebene Drehmoment erzeugen. Der Strom im Stromzwischenkreis müsste dazu sprunghaft ansteigen. Dies ist jedoch unerwünscht, weil der Sprung im Drehmoment des Luftspaltes von der Maschine zu einem erheblichen Anstieg der Drehzahl führen kann, bis der Drehzahlregler den Anstieg der Drehzahl über eine Reduzierung des Drehmomentes ausgeregelt hat. Ein Sprung im Strom beim Einschalten eines Stromzwischenkreisumrichters hat einen entsprechenden Leistungssprung in dem speisenden Netz zur Folge, welcher - insbesondere bei einem weniger leistungsfähigen Bordnetz eines Schiffes - das speisende Netz in unzulässiger Weise überlasten kann. Um dies zu vermeiden, ist vorgesehen, dass zwischen dem Drehzahlreglerausgang und dem Eingang eines Stromreglers ein Hochlaufgeber angeordnet ist. Diesem obliegt es, im Einschaltaugenblick jeglichen Sollwertsprung von dem betreffenden Stromregler fernzuhalten, damit der Strom in dem Zwischenkreis des Umrichters allmählich und damit sanft hochgefahren werden kann, ohne das speisende Stromnetz zu überlasten und/oder zu einer störenden Erhöhung der Drehzahl zu führen.

Sobald der Hochlauf abgeschlossen ist, kann dieser Hochlaufgeber vor einem Stromregler durch einen Schalter überbrückt werden. Dadurch wird die Dynamik in dem Drehzahlregelkreis von dem Hochlaufgeber nicht negativ beeinflusst.

Schließlich entspricht es der Lehre der Erfindung, dass an wenigstens einer Drehstromsynchronmaschine und/oder an einer Steuer-, Zwischen- oder Abtriebswelle wenigstens ein Drehzahl- und/oder Lagegeber angeordnet ist. Vor allem für den Drehzahlregler wird ein Drehzahlgeber benötigt oder ein Lagegeber, aus dessen Signal durch Ableitung auf die Drehzahl geschlossen werden kann. Die maschinenseitige Kommutierung in einem Drehzahlbereich unterhalb von 10 % der Nenndrehzahl erfordert eine Information über die jeweils aktuelle Lage des betreffenden Rotors. Aus Redundanzgründen empfiehlt die Erfindung daher, zwei Lagegeber vorzusehen, und von diesen jeder Drehstromsynchronmaschine einen eigenen Lagegeber zuzuordnen.

Weitere Merkmale, Einzelheiten, Vorteile und Wirkungen auf der Basis der Erfindung ergeben sich aus der nachfolgenden Beschreibung eines bevorzugten Ausführungsbeispiels der Erfindung sowie anhand der Zeichnung. Hierbei zeigt:

FIG 1    ein Blockschaltbild der Leistungskomponenten eines er- findungsgemäßen Antriebs;

FIG 2    ein Blockschaltbild der Regelungselemente des Antriebs aus FIG. 1;

FIG 3a    eine schematische Schnittansicht quer durch eine erste Drehstromsynchronmaschine zu einem Zeitpunkt $t_0$, bei einem Rotorpositionswinkel $a_1$; sowie

FIG 3b    eine schematische Schnittansicht quer durch eine zwei- te, an die erste gekoppelte Drehstromsynchronmaschine zu einem Zeitpunkt $t_0$, bei einem Rotorpositionswinkel $a_2$.

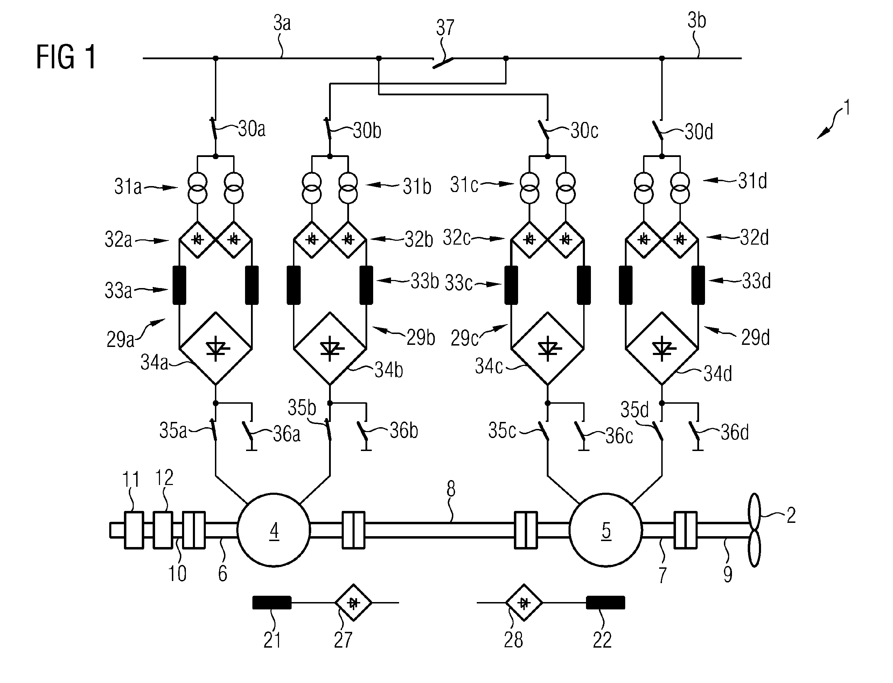

FIG 1 zeigt einen Antrieb 1 für einen Schiffspropeller 2. Es handelt sich hierbei um einen dieselelektrischen Antrieb, wobei nicht dargestellte Dieselgeneratoren das Schiffsnetz 3 speisen, aus welchem zwei elektromechanische Energiewandler versorgt werden. Hierbei handelt es sich um zwei Drehstromsynchronmotoren 4, 5, deren Rotorwellen 6, 7 durch eine Zwischenwelle 8 drehfest zu einer Tandemanordnung miteinander verbunden sind, so dass beide Drehstromsynchronmotoren 4, 5 auf dieselbe Abtriebswelle 9 arbeiten, an welcher der Schiffspropeller 2 sitzt. An dem gegenüberliegenden Ende dieses Wellenzuges 4 bis 9 befindet sich eine kurze Steuerwelle 10 mit zwei Lage- und/oder Drehzahlgebern 11, 12.

Die beiden Drehstromsynchronmaschinen 4, 5 haben jeweils einen Stator 13, 14 und einen als Polrad ausgebildeten Rotor 15, 16.

Jeder Stator 13, 14 ist mit zwei Drehstromwicklungen 17a, 17b; 18a 18b versehen, bestehend aus jeweils drei um 120° gegeneinander versetzten Wicklungen S1a, S2a, S3a; S1b, S2b, S3b. Die Wicklungen S1a, S2a, S3a der einen Drehstromwicklung 17a, 18a sind gegenüber den entsprechenden Wicklungen S1b, S2b, S3b der anderen Drehstromwicklung 17b, 18b derselben Drehstromsynchronmaschine 4, 5 um 30° versetzt.

Jeder als Polrad ausgebildete Rotor 15, 16 hat denselben Aufbau: Auf dem mit zwei Polschenkeln 19, 20 versehenen Rotor 15, 16 ist jeweils eine Erregerwicklung 21, 22 vorgesehen sowie jeweils zwei Dämpferwicklungen 23 bis 26, jeweils einmal achsparallel zu der betreffenden Erregerwicklung 21, 22 und jeweils einmal quer dazu.

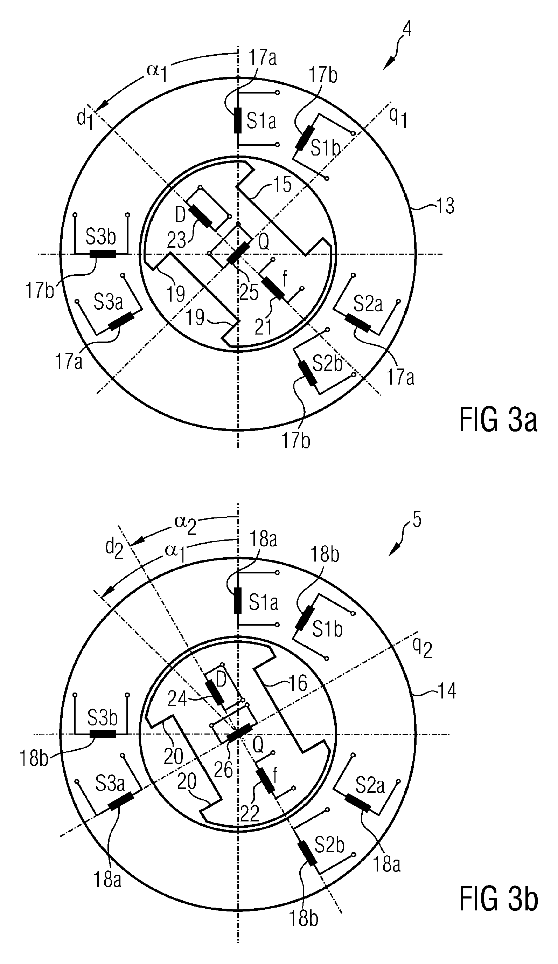

Bei den beiden Schnittansichten in FIG 3a, 3b handelt es sich um winkeltreue Vertikalschnitte, d.h., die Wicklungen S1a haben jeweils eine in vertikaler Richtung orientierte Wicklungs- bzw. Magnetisierungsachse, die Wicklungen S2b dagegen jeweils eine in horizontaler Richtung orientierte Wicklungs- bzw. Magnetisierungsachse. Da zwei benachbarte Wicklungen S1a, S1b, S2a, S2b, S3a, S3b jeweils um 30° bzw. um 90° gegeneinander versetzt sind, sind die von den sechs Wicklungen S1a, S1b, S2a, S2b, S3a, S3b einer Drehstromsynchronmaschine 4, 5 erzeugbaren Magnetisierungsrichtungen um 30° gegeneinander versetzt, mithin gibt es insgesamt zwölf verschiedene Magnetisierungsrichtungen. Bei einer Umdrehung des synchron umlaufenden Rotors 15, 16 werden also von den Statorwicklungen S1a, S1b, S2a, S2b, S3a, S3b insgesamt zwölf Pulse erzeugt. Es handelt sich demnach bei den dargestellten Drehstromsynchronmaschinen 4, 5 jeweils um zwölfpulsige Maschinen mit einer Polpaarzahl von 1.

Die beiden Schnittansichten FIG 3a und FIG 3b wurden jeweils zum selben Zeitpunkt $t_0$ erstellt. Die direkte Achse d des Rotors 15 der einen Maschine 4 aus FIG. 3a schließt mit der durch die magnetische Achse der Wicklung S1a definierten Bezugspunkt einen Winkel $a_1$ von 47° ein, während zum selben Zeitpunkt die direkte Achse d des Rotors 16 aus FIG. 3b mit der durch die magnetische Achse der Wicklung S1a der betreffenden Maschine 5 definierten Bezugspunkt einen Winkel $a_2$ von 32° einschließt. Somit ergibt sich ein Versatzwinkel β = $a_1$ - $a_2$ = 47° - 32° = 15°.

Die beiden Rotoren 15, 16 sind also durch die Zwischenwelle 8 drehfest miteinander verbunden, jedoch so, dass der Rotor 16 einer Drehstromsynchronmaschine 5 dem Rotor 15 der anderen Drehstromsynchronmaschine 4 stets um 15° nacheilt, während die Magnetisierungsrichtungen der jeweiligen Wicklungen 15a, 15b; 16a, 16b ihrer Statoren 13, 14 exakt parallel zueinander ausgerichtet sind.

Für den Versatzwinkel β gilt β = 15° = 180° / (p * m) = 180° / 12, wobei p = Polpaarzahl = 1 und m = Zahl der Maschinenpulse pro Umdrehung = 12.

Während die Erregerwicklungen 21, 22 durch je einen Gleichrichter 27, 28 gespeist werden, ist statorseitig für jede Drehstromwicklung 17a, 17b, 18a, 18b jeweils ein Stromzwischenkreisumrichter 29a - 29d vorgesehen. Alle diese Stromzwischenkreisumrichter 29a - 29d sind identisch aufgebaut: Jenseits eines netzseitigen Schalters 30a - 30d schließt sich zunächst ein Transformatorblock 31a - 31d an. Diesem nachgeschaltet ist jeweils ein Gleichrichterblock 32a - 32d; der Gleichstromzwischenkreis ist jeweils durch Drosseln 33a - 33d bedämpft und wird abgeschlossen durch je einen maschinenseitigen Drehstromwechselrichter 34a - 34d. Dessen dreiphasiger Ausgang kann mittels je zweier Schalter 35a - 35d, 35a - 36d wahlweise auf eine dreiphasige Statorwicklung 17a, 17b, 18a, 18b geschalten werden oder auf Masse gelegt werden.

Die Schalter 30a - 30d können einzeln und unabhängig voneinander ein- und ausgeschalten werden, wie auch die Schalter 35a - 35d und 36a - 36d.

Ferner ist ein Schalter 37 vorgesehen, mit welchem das Schiffsnetz 3 getrennt werden kann in zwei Schienen 3a, 3b. Das Öffnen des Schalters 37 ermöglicht den Weiterbetrieb des Antriebes mit reduziertem Drehmoment, wenn eine von den beiden Schienen 3a oder 3b wegen einer Störung - bspw. einem Kurzschluss - ausgefallen ist.

Die Drehstromwechselrichter 34a - 34d werden infolge der sich drehenden Rotoren 15, 16 weiter geschaltet. Die dazu erforderliche Kenntnis über die jeweilige Drehstellung der Rotoren 15, 16 kann bei Drehzahlen oberhalb von 10 % der Nenndrehzahl durch die aufgrund des Erregerfeldes in den Statorspulen 17a, 17b, 18a, 18b induzierten Spannung ermittelt werden, und/oder - insbesondere bei Drehzahlen unterhalb von 10 % der Nenndrehzahl - anhand des Signals eines Lagegebers 11, 12.

Demgegenüber werden die netzseitigen Gleichrichter 32a - 32d von je einem Regler angesteuert, der damit die Höhe des Gleichstroms in dem Stromzwischenkreis 33a - 33d entsprechend einem vorgegebenen Drehmomentsollwert $M_1^*$ - $M_4^*$ ausregelt.

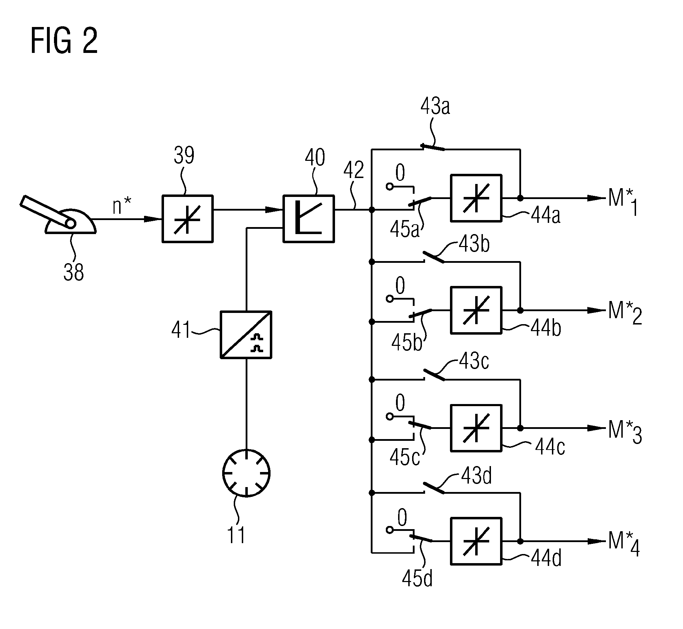

Diese Drehmomentsollwerte $M_1^*$ - $M_4^*$ werden mit der Schaltung nach FIG. 2 erzeugt:

Mit dem Fahrhebel 38 wird ein Drehzahlsollwert n* vorgegeben, wobei Sprünge von einem nachgeschalteten Hochlaufgeber 39 geglättet werden. Dessen Ausgangssignal gelangt an den Sollwerteingang des Drehzahlreglers 40.

Ein Lagegeber 11 ist als Inkrementalgeber ausgebildet; aus dessen Ausgangssignalimpulsen bildet ein Wandler 41 zunächst ein Lagesignal und daraus sodann durch zeitliche Ableitung einen Drehzahlistwert $n_{ist}$, der zum zweiten Eingang des Drehzahlreglers 40 geführt ist.

Von dessen Ausgangssignal 42 werden die Drehmomentsollwerte $M_1^*$ - $M_4^*$ abgeleitet.

Im stationären Betrieb eines oder mehrerer, aktiver Stromzwischenkreisumrichter 29a - 29d ist je ein zugeordneter Schalter 43a - 43d zwischen dem Ausgang 42 des Drehzahlreglers und dem Drehmomentsollwert $M_1^*$ - $M_4^*$ geschlossen und sorgt dafür, dass von den betreffenden, aktiven Gleichrichtern 32a - 32d das Ausgangssignal 42 des einzigen Drehzahlreglers 40 - zumeist ein PI-Regler mit Proportional- und Integralanteil - als Drehmomentsollwert $M_1^*$ - $M_4^*$ verwendet wird. Im vorliegenden Beispiel sind die Schalter 30a, 35a und 43a geschlossen - der Stromkreiszwischenumrichter 29a ist in Betrieb und treibt über eine Drehstromstatorwicklung 17a der Drehstromsynchronmaschine 4 den Schiffspropeller 2 an.

Um nun den Stromzwischenkreisumrichter 29b in Betrieb zu nehmen, werden zunächst dessen Leistungsschalter 30b, 35b geschlossen. Noch ist jedoch der Schalter 43b geöffnet. Der Drehmomentsollwert $M_2^*$ ist daher nicht von dem Drehzahlregler 40 bestimmt, sondern durch einen Hochlaufgeber 44b, dessen Eingangssignal von einem Schalter 45b an einen Signalpegel "0" gelegt ist.

Nun wird der Schalter 45b umgeschaltet von dem konstanten Signalpegel "0" an das Ausgangssignal 42 des Drehzahlreglers 40. Sofort fährt der Drehmomentsollwert $M_2^*$ entlang einer vorgegebenen Hochlauframpe von 0 beginnend bis zu dem Ausgangssignalwert 42; hat er diesen Pegel erreicht, wird der Schalter 43b geschlossen und von diesem der Hochlaufgeber 44b samt vorgeschaltetem Umschalter 45b überbrückt.

Durch diese Maßnahme werden Signalsprünge von dem Leistungsteil ferngehalten, die unzulässige Leistungssprünge in dem speisenden Netz zur Folge hätten. Das Zuschalten eines Stromzwischenkreisumrichters 29a - 29d, während andere bereits in Betrieb sind, erfolgt daher äußerst schonend, und der Drehzahlregler 40 spürt dabei, wie infolge des dadurch allmählich gesteigerten Drehmomentes an dem Wellenzug 4 bis 9 die Drehzahl steigt, und wird insofern sein Ausgangssignal 42 entsprechend zurücknehmen.

**Patentansprüche**

1.  Antrieb (1) mit durch Stromzwischenkreisumrichter (29) gespeisten Drehstromsynchronmaschinen (4,5), insbesondere für eine Nennleistung von 10 MW oder darüber, **dadurch gekennzeichnet, dass** die Rotoren (15,16) wenigstens zweier Drehstromsynchronmaschinen (4,5), insbesondere Drehstromsynchronmotoren, mechanisch miteinander gekoppelt sind.

2.  Antrieb nach Anspruch 1,
    **dadurch gekennzeichnet, dass** der Antrieb (1) für niedrige Drehzahlen ausgelegt ist, insbesondere zum Antrieb eines Schiffspropellers (2).

3.  Antrieb nach Anspruch 1 oder 2,
    **dadurch gekennzeichnet, dass** wenigstens zwei baugleiche Drehstromsynchronmaschinen (4,5) miteinander gekoppelt sind.

4.  Antrieb nach einem der Ansprüche 1 bis 3,
    **dadurch gekennzeichnet, dass** jede Drehstromsynchronmaschine (4,5) wenigstens zwei Drehstromwicklungen (17a,17b;18a,18b) aufweist, welche gegeneinander versetzt sind.

5.  Antrieb nach einem der vorhergehenden Ansprüche,
    **dadurch gekennzeichnet, dass** jede Drehstromsynchronmaschine (4,5) zwei Drehstromwicklungen (17a,17b;18a,18b) aufweist, welche um einen Winkel von 30° gegeneinander versetzt sind.

6.  Antrieb nach einem der vorhergehenden Ansprüche,
    **dadurch gekennzeichnet, dass** die Rotoren (15,16) wenigstens zweier Drehstromsynchronmaschinen (4,5) derart miteinander gekoppelt sind, dass jeweils zwei Positionswinkel $a_1$, $a_2$, welche die beiden Rotoren (15,16) mit jeder beliebigen, als Bezug dienenden Statorwicklung (S1a, S1b, S2a, S2b, S3a, S3b) ihrer betreffenden Drehstromsynchronmaschine (4,5) einschließen, stets ungleich sind:

$$a_1 - a_2 ⑤ 0.$$

7.  Antrieb nach einem der vorhergehenden Ansprüche,
    **dadurch gekennzeichnet, dass** die Rotoren (15,16) wenigstens zweier Drehstromsynchronmaschinen (4,5) derart miteinander gekoppelt sind, dass jeweils zwei Positionswinkel $a_1$, $a_2$, welche die beiden Rotoren (15,16) mit einer als Bezug dienenden Statorwicklung
    (S1a, S1b, S2a, S2b, S3a, S3b) ihrer betreffenden Drehstromsynchronmaschine (4,5) einschließen, sich etwa durch einen Zwischenwinkel (Versatzwinkel β) unterscheiden, welcher sich bestimmt aus dem Quotient, gebildet aus 180°, dividiert durch das Produkt aus Polpaarzahl p mal der Zahl m der Maschinenpulse, jeweils bezogen auf eine Drehstromsynchronmaschine (4, 5) :

$$ß = a_1 - a_2 = 180° / p * m,$$

wobei

> p = Polpaarzahl pro Drehstromsynchronmaschine
> m = Maschinenpulse pro Drehstromsynchronmaschine

8.  Antrieb nach einem der vorhergehenden Ansprüche,
    **dadurch gekennzeichnet, dass** die Rotoren (15,16) wenigstens zweier Drehstromsynchronmaschinen (4,5) durch eine Zwischenwelle (8) miteinander gekoppelt sind.

9.  Antrieb nach Anspruch 8,
    **dadurch gekennzeichnet, dass** die Zwischenwelle (8) endseitige Anschlüsse, insbesondere Anschlussflansche, aufweist.

10. Antrieb nach Anspruch 9,
    **dadurch gekennzeichnet, dass** die endseitigen Anschlüsse, insbesondere Anschlussflansche, kranzförmig angeordnete Befestigungsbohrungen aufweisen, welche zum Anschrauben der Rotorwelle (6,7) je einer Drehstromsynchronmaschine (4,5) dienen.

11. Antrieb nach Anspruch 10,
    **dadurch gekennzeichnet, dass** die kranzförmig angeordneten Befestigungsbohrungen derart angeordnet sind, dass sie bei einer Verdrehung um den Versatzwinkel β = $a_1$ - $a_2$ = 180° / p * m ineinander übergehen.

12. Antrieb nach einem der vorhergehenden Ansprüche,
    **dadurch gekennzeichnet, dass** jede Drehstromwicklung (17a,17b;18a,18b) einer, vorzugsweise beider, insbesondere aller Drehstromsynchronmaschinen (4,5) durch einen eigenen Stromzwischenkreisumrichter (29a-29d) gespeist wird.

13. Antrieb nach einem der vorhergehenden Ansprüche,
    **dadurch gekennzeichnet, dass** die Stromzwischenkreisumrichter (29a-29d) einzeln ein- und abschaltbar sind (Schalter 30a-30d,35a-35d).

14. Antrieb nach einem der vorhergehenden Ansprüche,
    **dadurch gekennzeichnet, dass** der netzseitige Gleichrichter (32a-32d) jedes Stromzwischenkreisumrichters (29a-29d) mit einem eigenen Stromregler gekoppelt ist, um den Strom im Zwischenkreis (33a-33d) auf einen vorgegebenen Sollwert $M_1^*$-$M_4^*$ zu regeln.

15. Antrieb nach einem der vorhergehenden Ansprüche, **dadurch gekennzeichnet, dass** der Sollwert $M_1^*$-$M_4^*$ für den Strom im Zwischenkreis (33a-33d) für die eingeschalteten Stromzwischenkreisumrichter (29a-29d) von einem gemeinsamen Drehzahlregler (40) abgeleitet wird.

16. Antrieb nach Anspruch 15, **dadurch gekennzeichnet, dass** zwischen dem Drehzahlreglerausgang (42) und dem Eingang eines Stromreglers ein Hochlaufgeber (44a-44d) angeordnet ist.

17. Antrieb nach Anspruch 16, **dadurch gekennzeichnet, dass** der Hochlaufgeber (44a-44d) vor einem Stromregler durch einen Schalter (43a-43d) überbrückbar ist, sobald der Hochlauf abgeschlossen ist.

18. Antrieb nach einem der vorhergehenden Ansprüche, **daFIGdurch gekennzeichnet**, **dass** an wenigstens einer Drehstromsynchronmaschine (4,5) und/oder an einer Steuerwelle (10), Zwischenwelle (8) oder Abtriebswelle (7) wenigstens ein Drehzahl- und/oder Lagegeber (11,12) angeordnet ist.

FIG 1

EP 2 099 124 A2

FIG 2

FIG 3a

FIG 3b